# EUROPEAN PATENT APPLICATION

(11) **EP 4 435 947 A1**
(43) Date of publication of application: **25.09.2024**
(21) Application number: 23163693.7
(22) Date of filing: 23.03.2023
(51) Int. Cl.: H01M 50/209, H01M 50/211, H01M 50/213, H01M 50/503, H01M 50/505, H01M 50/583

(54) **BUSBAR AND ELECTRONIC MODULE**

(71) Applicant: Röchling Automotive SE, 68165 Mannheim (DE)
(72) Inventor: Di Pauli, Ferdinando, 39100 Bolzano (IT); Morosini, Alessandro, 38010 Ronzone (TN) (IT); Albrizio, Chiara, 39055 Laives (BZ) (IT)
(74) Representative: Ullrich & Naumann PartG mbB

(57) **Abstract**

A busbar (114) for interconnecting at least two electronic components (112) is disclosed. The busbar (114) comprises at least two connecting portions (118) each connectable to at least one of the at least two electronic components (112) and at least one bridging portion (120) arranged between the at least two connecting portions (118), wherein the bridging portion (120) comprises at least one electrically connecting part (122) arranged within a clear dimension of the bridging portion (120), wherein the electrically connecting part (122) is at least partially flexible thereby mechanically decoupling the two connecting portions (118).

Further, an electronic module (110) is disclosed.

## Description

### Technical Field

The invention relates to a busbar for interconnecting at least two electronic components and to an electronic module. The devices according to the present invention may generally be applied in any field where at least two electronic components may be interconnected. Specifically, the present invention may for example be used for interconnecting at least two battery cells, such as in battery systems. Thus, the invention may be used in the field of electrical power storage, such as electrical and/or electrochemical energy storage, e.g. in electrically powered entities. Other application however are also feasible.

### Background art

Busbars and electronic modules are generally known to be used for interconnecting electronic components. However, in general, when interconnecting electronic components, for safety reasons, fuses are provided to prevent damages to the electronic components occurring due to overcurrent events.

US 2021/0193982 A1 describes a busbar to which a fuse has been applied including a busbar body for electrically connecting cells of a plurality of batteries, at least one fuse for electrically connecting power supplied from the outside through an independent connection part for each cell of the battery through the busbar body, and formed on the busbar body, and a resin part formed on at least a portion of the fuse.

US 10,957,894 B2 describes a bus bar module of a battery system that includes a bus bar, a sensing circuit carrier, and a fuse assembly. The bus bar is held by a tray and configured to electrically connect two battery cells of the battery system. The sensing circuit carrier includes at least a first electrical conductor and a dielectric insulator surrounding the first electrical conductor. The fuse assembly includes a first holder terminal, a second holder terminal, and a fuse disposed between and electrically connected to the first and second holder terminals. The first holder terminal is electrically connected to the first electrical conductor of the sensing circuit carrier, and the second holder terminal is electrically connected to the bus bar such that the fuse assembly defines a segment of a voltage sensing line from the bus bar through the sensing circuit carrier towards a control device.

US 10,971,912 B2 describes a high voltage distribution system with multiple fuses. The high voltage distribution system includes multiple laminated busbars that are electrically coupled to a battery and to the multiple fuses. Busbars are electrically coupled to the one or more fuses via electrical connections between the busbars and the fuses. The electrical connections can pass through other busbars without having an electrical coupling to the other busbars. An insulating layer may be used between the busbars to prevent overcurrent events. The configuration, size, and position of each busbar is selected based on the electrical requirements of components that are electrically coupled to the busbar and based on the prevention of overcurrent events.

US 2020/0083512 A1 describes a bus bar including terminal portions disposed at both ends, respectively; a plurality of bridges disposed between the terminal portions to electrically connect the terminal portions, and to be sequentially fused when an overcurrent flows. The plurality of bridges may be configured to have different resistance values, respectively.

US 10,957,892 B2 describes a battery interconnect that may include a desired current capacity, integrated fusible links, and may be manufacturable using cost effective techniques. In some embodiments, a battery interconnect includes a busbar and relatively thinner links. A busbar carries larger currents and accordingly its cross-sectional areas are relatively larger to reduce ohmic losses. A link carries a much smaller current, and a fusible link is configured to break the circuit when the current is above a threshold, thus requiring a relatively small cross-sectional area. These sometime disparate length scales are addressed using several techniques such as layering a busbar and a foil sheet and pressing portions of a busbar to form the links. The links can be affixed to a plurality of battery cells to connect the cells in parallel or series.

EP 3 702 219 A1 describes a length compensation element for a busbar group, wherein at least one bending region of the length compensation element is made of at least two stacked, substantially identically shaped, bendable lamellae oriented transversely to a length compensation direction of the length compensation element.

Despite the advantages involved in known busbars and electronic modules, several technical challenges remain. Thus, generally, production costs for complex fuses are quite high. Furthermore, electronic components and their connecting busbars are usually sensitive to mechanical forces, e.g. to compressive forces and/or torques. In particular, interconnecting elements such as busbars may break under mechanical forces leading to failures. Such forces may specifically act on electronic components and busbars due to multiple often unavoidable factors, such as thermal expansion, misalignment, tolerances and aging. However, providing for mechanical stability and including safety fuses in busbars and electronic modules are typically, if at all, implemented by two or more distinctly separate components, leading to a more complex and more expensive manufacturing of busbars and electronic modules.

### Problem to be solved

It is therefore desirable to provide busbars and electronic modules, which address the above-mentioned shortcomings of known devices. Specifically, busbars and electronic modules shall be proposed, which allow for higher mechanical loads, while protecting components from electrical overloads and lowering production costs.

### Summary

This problem is addressed by a busbar for interconnecting at least two electronic components and by an electronic module with the features of the independent claims. Advantageous embodiments which might be realized in an isolated fashion or in any arbitrary combinations are listed in the dependent claims as well as throughout the specification.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

In a first aspect of the present invention, a busbar for interconnecting at least two electronic components is proposed. The busbar comprises at least two connecting portions each connectable to at least one of the at least two electronic components and at least one bridging portion arranged between the at least two connecting portions. The bridging portion comprises at least one electrically connecting part arranged within a clear dimension of the bridging portion. The electrically connecting part being at least partially flexible, thereby mechanically decoupling the two connecting portions.

The term "busbar" as used herein is a broad term and is to be given its ordinary and customary meaning to a person of ordinary skill in the art and is not to be limited to a special or customized meaning. The term specifically may refer, without limitation, to an electrical conductor configured for power distribution. The busbar may particularly be or may comprise at least one metal material, such as copper, brass, aluminum, and/or one or more of their alloys. The busbar may specifically be strip and/or bar shaped. Thus, the busbar may for example have a flat strip shape or a rod shape or may even be or may comprise a hollow tube. However, in principle, any arbitrary form may be possible.

The term "interconnecting" as used herein is a broad term and is to be given its ordinary and customary meaning to a person of ordinary skill in the art and is not to be limited to a special or customized meaning. The term specifically may refer, without limitation, to a process of electrically connecting at least two elements, such that electricity may be transmitted between the at least two elements, specifically both ways, such as from one element to the other element and vice versa.

The term "electronic component" as used herein is a broad term and is to be given its ordinary and customary meaning to a person of ordinary skill in the art and is not to be limited to a special or customized meaning. The term specifically may refer, without limitation, to an arbitrary object configured for being operated by and/or furnishing electric currents. In particular, the electronic component may be or may comprise an object configured for being a sink and/or a source of electric power. Thus, for example, the electronic component may be or may comprise an electric consumer, i.e. a sink of electric power. Additionally or alternatively, the electronic component may be or may comprise at least one battery cell, i.e. a source of electric power.

The term "connecting portion" as used herein is a broad term and is to be given its ordinary and customary meaning to a person of ordinary skill in the art and is not to be limited to a special or customized meaning. The term specifically may refer, without limitation, to an arbitrary part of an object configured for being attached to another element. In particular, the connecting portion may be or may comprise at least one interface being configured for interacting with another element, for example for the purpose of unidirectionally or bidirectionally exchanging electrical power, i.e. electric currents. In particular, the connecting portion may be a part of the busbar and may be configured for being fixedly or reversibly attached to at least one of the two electronic components. As an example, the connecting portion may be welded and/or mechanically connected, e.g. clamped or fastened, to one of the at least two electronic components.

The term "bridging portion" as used herein is a broad term and is to be given its ordinary and customary meaning to a person of ordinary skill in the art and is not to be limited to a special or customized meaning. The term specifically may refer, without limitation, to an arbitrary part of an object arranged between at least two other parts of the same object and acting as a connector and/or coupling of these two parts. In particular, the bridging portion may be a link between the at least two connecting portions of the busbar.

The term "electrically connecting part" as used herein is a broad term and is to be given its ordinary and customary meaning to a person of ordinary skill in the art and is not to be limited to a special or customized meaning. The term specifically may refer, without limitation, to an electrically conductive piece of an object configured for transmitting electric currents. In particular, the electrically connecting part may be part of the bridging object and thus, may comprise the same material as the bridging object. However, additionally or alternatively, the electrically connecting part may comprise a different material than the bridging portion.

In particular, the electrically connecting part is arranged within a clear dimension of the bridging portion. As used herein, the term "clear dimension" is a broad term and is to be given its ordinary and customary meaning to a person of ordinary skill in the art and is not to be limited to a special or customized meaning. The term specifically may refer, without limitation, to an area that is projected by and/or from an object and/or element when illuminated by parallel light. In particular, the clear dimension of the bridging portion may refer to the area that is projected by the bridging portion when then bridging portion is illuminated by light parallel to a general direction of current flow through the bridging portion. Specifically, a first object and/or element that may be arranged within the clear dimension of a second object and/or element may not increase the area that is projected by the second object and/or element, but may, when illuminated by the parallel light, lay completely within the projected area of the second object. Thus, as an example, the electrically connecting part arranged within the clear dimension of the bridging portion, may not cast any shadow when the bridging portion is illuminated by light parallel to the general direction of current flow through the bridging portion. In particular, the electrically connecting part may not increase the area that is projected by the bridging portion. In other words, the electrically connecting part may not protrude from the bridging portion in a direction perpendicular to the flow of current through the bridging portion.

Further, the electrically connecting part may be configured for mechanically decoupling the two connecting portions of the busbar. In particular, the electrically connecting part may be configured for mechanically decoupling while at the same time electrically connecting the two connecting portions, e.g. while an increase of a resistance, such as of an electrical resistance, may kept at a minimum. Specifically, the mechanical decoupling may be achieved by the electrically connecting part at least partially being flexible. The term "flexible" as used herein is a broad term and is to be given its ordinary and customary meaning to a person of ordinary skill in the art and is not to be limited to a special or customized meaning. The term specifically may refer, without limitation, to characteristic and/or property of an object and/or element to reversibly deform, i.e. change its shape, when a force is applied to that object and/or element.

In particular, the electrically connecting part may be configured for at least partially reversibly deform in case a force is applied to the electrically connecting part, i.e. transmitted from one or both of the connecting portions onto the electrically connecting part, thereby for example mechanically decoupling the two connecting portions. As used herein, the term "mechanically decoupling" is a broad term and is to be given its ordinary and customary meaning to a person of ordinary skill in the art and is not to be limited to a special or customized meaning. The term specifically may refer, without limitation, to a prevention of undesired transmittal of physical and/or mechanical forces between at least two objects. Thus, mechanically decoupled objects and/or elements may be physically detached such that a movement of and/or a force acting on one object and/or element, at least within a predefined range, may be transmitted in a limited form or not at all onto the other object and/or element.

The electrically connecting part may comprise, specifically for mechanically decoupling the two connecting portions, at least one element selected from the group consisting of: at least one incision; at least one tapering, e.g. a tapering such that the at least two connecting portions have different cross sectional areas; at least one kinematic pair, e.g. a kinematic pair connecting at least two parts of the bridging portion, such as at least one joint and/or hinge.

In particular, combinations of the elements of the electrically connecting part may be possible. Thus, as an example, one or more of the at least one incision, the at least one tapering and the at least one kinematic pair may also be combined in the electrically connecting part.

The term "incision" as used herein is a broad term and is to be given its ordinary and customary meaning to a person of ordinary skill in the art and is not to be limited to a special or customized meaning. The term specifically may refer, without limitation, to an arbitrary notch and/or cut added and/or made to an object starting on the object's surface. In particular, the incision may have an arbitrary form and/or geometry. Thus, the incision may for example be or may comprise a simple cut and/or slit. Additionally or alternatively however, the incision may also be or may comprise a recess removing material from the object the incision is added and/or made to, such as to the electrically connecting part of the bridging portion of the busbar.

The term "tapering" as used herein is a broad term and is to be given its ordinary and customary meaning to a person of ordinary skill in the art and is not to be limited to a special or customized meaning. The term specifically may refer, without limitation, to a shape and/or form that in one direction becomes progressively narrower and/or smaller. In particular, an object that is or comprises at least one tapering may have a cross section that becomes progressively smaller in one direction. Thus, in case the electrically connecting part comprises the tapering, a cross section area of the electrically connecting part may gradually decrease in size.

The term "kinematic pair" as used herein is a broad term and is to be given its ordinary and customary meaning to a person of ordinary skill in the art and is not to be limited to a special or customized meaning. The term specifically may refer, without limitation, to an arbitrary connection between two physical objects and/or elements that imposes constraints on a relative movement between these two physical objects and/or elements. In particular, the kinematic pair may be or may comprise at least one joint and/or hinge.

Specifically for mechanically decoupling the two connecting portions, the electrically connecting part may comprise more than one incision, i.e. at least two incisions. The at least two incisions may particularly be arranged on opposing sides of the bridging portion.

Additionally or alternatively, and specifically for mechanically decoupling the two connecting portions, the electrically connecting part may comprise at least three incisions. In particular, at least two of the at least three incisions may be arranged on the same side of the bridging portion. Further, as an example, at least one of the at least three incisions may be arranged on a side opposing the side on which the at least two other incisions are arranged.

The at least three incisions may be arranged in an alternating fashion. For example, the at least three incisions may be arranged such that in a direction from a first of the at least two connecting portions to a second of the at least two connecting portions the at least three incisions alternate between being arranged on a left and on a right side of the bridging portion.

The bridging portion may further comprise at least one cut out, such as at least one opening and/or hole. As used herein, the term "cut out" is a broad term and is to be given its ordinary and customary meaning to a person of ordinary skill in the art and is not to be limited to a special or customized meaning. The term specifically may refer, without limitation, to an arbitrarily shaped hole and/or opening in the bridging portion. In particular, the cut out may comprise a closed edge and/or boundary. Thus, the cut out may be surrounded and/or enclosed by the bridging portion, e.g. by the material of the bridging portion.

At least one of the incisions may be deeper than at least one other incision. Thus, in particular, the incisions may have different shaped. As an example, one incision may have a different shape than another incision. In particular, one incision may be deeper, i.e. may have a higher value of a depth than at least one other incision, wherein the depth may be specifically be measured from the surface of the electrically connecting part of the bridging portion to a bottom of the incision.

A maximum depth dₘₐₓ of at least one of the incisions may be bigger than a maximum width wₘₐₓ of the same incision. Specifically a maximum depth of at least two or more incisions, more specifically of all incisions, may be bigger than a maximum width wₘₐₓ of the same incision. In particular, for at least one incision, the maximum depth dₘₐₓ may be equal to or more than 1.5 times the maximum width wₘₐₓ of the same incision, i.e. dₘₐₓ ≥ 1.5 wₘₐₓ. Additionally or alternatively, for at least one incision, the maximum depth dₘₐₓ may be equal to or more than 2 times the maximum width wₘₐₓ of the same incision, i.e. dₘₐₓ ≥ 2 wₘₐₓ. Preferably, width "w" and incision deep "d" are optimized to create joints. By connecting more joints the system can act as a mechanism and decouple mechanically the system.

A minimum depth dₘᵢₙ of at least one of the incisions may be bigger than ½ of a maximum width W_{1/2} of the bridging portion, specifically dₘᵢₙ ≥ W_{1/2}. In particular, a minimum depth dₘᵢₙ of two or more incisions, more specifically of all incisions, may be bigger than ½ of a maximum width W_{1/2} of the bridging portion. In particular, the maximum width of the bridging portion may refer to a distance between the at least two connecting portions of the busbar.

At least one of the incisions, specifically all incisions, may comprise a void, such as a gap and/or recess where material of the electrically connecting part of the bridging portion of the busbar may have been removed and/or cut out. The void may, specifically when viewed in a top plane view of the busbar, have a projected shape. The projected shape of the void may be a shape selected from the group consisting of a rectangular shape; a triangular shape, such as a v-shape; a trapezoidal shape; a u-shape, such as a rounded u-shape, e.g. a u-shape having a rounded and/or curved transition between the two ends of the u-shape and the bridge portion.

As an example, in the electrically connecting part, load release mechanisms, such as incisions and/or taperings and/or kinemaic pairs, such as joints or hinges, and/or cut outs, may be introduced in the busbar, e.g. into the metal busbar, specifically in one plane, e.g. into the same plane. The mechanism may specifically be made by a single incision and/or by a pattern of incisions in the busbar.

The size, shape and pattern of the incisions, taperings, kinematic pairs and/or cut outs may specifically be adapted by way of calculation and/or simulation in order to optimize a load compensation, such as when applying physical forces to the busbar and/or to the electronic components the busbar is interconnecting. Further, the shape and pattern of the incisions, taperings, kinematic pairs and/or cut outs may specifically be adapted by way of calculation and/or simulation in order to one or more of increase fatigue performances, minimizing the electrical resistance and minimizing local temperature peaks.

The electrically connecting part may specifically comprise at least one current safety element, such as a fuse and/or a circuit breaker. The term "current safety element" as used herein is a broad term and is to be given its ordinary and customary meaning to a person of ordinary skill in the art and is not to be limited to a special or customized meaning. The term specifically may refer, without limitation, to a fuse and/or to a circuit breaker. In particular, the current safety element may be an electrical safety device configured for interrupting an electrical connection, for example by melting and/or breaking, when a current exceeds a predefined limit for a predefined time, such as a predefined amperage for a predefined amount of time. The current safety element may specifically operate to provide overcurrent protection of an electrical circuit, i.e. protecting the at least two electronic components interconnected by the busbar. For example, the current safety element may be configured for interrupting current flow between the at least two connecting portions in case 1000A may be reached for 3 s.

One or more of the dimensions, e.g. a width and/or a depth and/or a cross section and/or a thickness, and/or at least one material of the electrically connecting part may be selected such that the at least one current safety element fulfills, at least within predetermined tolerances, at least one predefined characteristic, such as a predefined time-current-curve. As an example, by at least two kinematic pairs, i.e. by at least two joints, and/or by at least two incisions and/or by at least two taperings, and their intermediate connections, such as the remnants of the bridging portion between the at least two kinematic pairs, incisions and/or tapering, at least one cinematic chain may be created to serve and/or function as the current safety element. In particular, by setting one or both of the dimensions and the material of the cinematic chain, e.g. made by the at least two joints and/or by the at least two incisions or taperings as well as by their respective intermediate connections, the current safety element may be configured to fulfill a desired preset fuse characteristic, i.e. to follow a targeted and/or predefined time-current-curve. In particular, the fuse element may be configured to show a predefined break time at different currents by setting and/or selecting the dimensions and/or the materials of the electrically connecting part. As an example, a section shape, e.g. a cross-sectional shape, of the at least one intermediate connection and the shape and the dimensions of the joints itself, and also the joint's connections to the two connecting portions, i.e. to the rigid parts, of the busbar, may be selected to adjust the reaction time of the fuse for different electrical loads and/or for different currents. This may specifically lead to a fuse characteristic following a desired break time depending on the current. In other words, for almost every current, the desired and/or correct break time may be reached by the current safety element, e.g. for the same system. As an example, at least one of the dimensions and/or the materials of the electrically connecting part, i.e. of the joints, the incisions and/or the taperings, may be set and/or configured such that, at least within predetermined tolerances, a preset thermal conductivitiy, a preset thermal capacity and a preset electrical conductivity and a preset joul heating effect are reached. As an example, such as to reach for every reasonable current the correct, i.e. predetermined, break time.

In case the electrically connecting part comprises at least one incision, a remnant of the bridging portion on a side opposing the at least one incision may be or may comprise the current safety element. In particular, a depth d and/or a width w of the at least one incision and additionally or alternatively a material of the remnant of the bridging portion may be chosen according to the remnant's ability to withstand a preset electric current for a preset amount of time before breaking. In particular, the depth d and/or the width w of the at least one incision may be chosen according to a predefined required dimension, such as one or more of a predefined required cross-section and a predefined required length, of the remnant of the bridging portion with which the remnant is able to withstand, e.g. before breaking, the preset electric current, i.e. a predetermined current threshold, for a preset amount of time, i.e. for a predetermined time threshold.

Specifically, the depth d and the width w of the at least one incision may be chosen and/or individually adapted according to a desired characteristic of the electrically connecting part. In particular, such a characteristic of the electrically connecting part may be its flexibility, i.e. for the ability to mechanically decouple the two connecting portions of the busbar. Additionally or alternatively, such a characteristic may refer to the electrically connecting part comprising the current safety element, e.g. to the part's ability to function as a fuse. Thus, as an example, the incisions may be shaped differently, e.g. each incision may have a different shape.

As an example, the width w and the depth d of the at least one incision may be chosen and/or individually adapted to create at least one joint and/or such that the remnant of the bridging portion may act as at least one joint, e.g. by elastic deformation of the remnant when a mechanical load is applied to the busbar. As an example, the remnant of the bridging portion, specifically by acting as a joint, may mechanically decouple the two connecting portions. For example, by implementing a plurality of incisions, e.g. acting as a plurality of joints connected in series, an extent of movement of the two connecting portions independently from each other, i.e. an effectiveness of the mechanical decoupling, may be raised. As an example, the plurality of serially connected joints may form a decoupling mechanism, e.g. mechanically decoupling the system, i.e. the two connecting portions.

In case the electrically connecting part comprises at least one tapering, the tapering may be or may comprise the current safety element. In particular, the dimension and/or a material of the tapering, e.g. of the electrically connecting part comprising the tapering, may be chosen according to the tapering's ability to withstand a preset electric current for a preset amount of time before breaking.

In case the electrically connecting part comprises at least one kinematic pair, the at least one kinematic pair may be or may comprise the current safety element. Specifically, at least one dimension and/or material of at least one part of the kinematic pair may be chosen according to the part's ability to withstand a preset electric current for a preset amount of time before breaking.

As an example, the dimensions and/or the materials of the electrically connection part and its one or more of the at least one incision, the at least one tapering and the at least one kinematic pair comprising the current safety element may be adapted to sustain under a predetermined current, e.g. a current threshold, for a predetermined time, e.g. a time threshold. In particular, one or more of the respective elements, i.e. the remnant, the tapering and the kinematic pair, may be required to withstand the predetermined current for the predetermined time before breaking. The adaption may specifically be performed by calculation and/or simulation of the reaction of the respective element to various currents and times. As an example, the current safety element may comprise one or more metal materials selected from the group consisting of aluminum; copper and one or more of their alloys, such as Konstantane. For example, the current safety element may additionally or alternatively comprise one or more metal materials selected from the group consisting, e.g. besides aluminum and copper, of other conductive metals; one or more of their alloys and/or one or more semiconductor materials.

At least one of the at least two electronic components may be a battery cell. Specifically, the busbar may be configured for interconnecting at least one battery cell with another electronic component. Additionally or alternatively, both of the at least two electronic components may be battery cells. Thus, as an example, the busbar may be configured for interconnecting at least two battery cells.

In a further aspect of the present invention, an electronic module is disclosed. The electronic module comprises at least two electronic components and at least one busbar as disclosed herein, wherein the busbar interconnects the at least two electronic components. Thus, for possible definitions and options, reference is made to the description of the busbar as disclosed herein.

As an example, at least one of the at least two electronic components may be a battery cell. In particular, the at least one battery cell may be selected from the group consisting of at least one pouch battery; at least one cylindrical battery; at least one prismatic battery; and at least one blade battery, e.g. at least one blade cell.

Additionally or alternatively, the electronic module may be a battery module, wherein both electronic components may be battery cells. Thus, the electronic module may be a battery module comprising at least two battery cells and at least one busbar interconnecting the at least two battery cells. Specifically, the at least two connecting portions of the busbar may each be welded and/or mechanically connected to one of the two battery cells.

The proposed devices provide a large number of advantages over known devices of similar kind. In particular, the devices according to the present invention may be able to allow combining needed mechanical and electrical loads with the necessary decoupling attitude. In particular, load or mechanical force induced breakages and/or cracks of single or multiple components of the devices may be prevented mechanically decoupling the connecting portions of the busbar via the at least partially flexible electrically connecting part of the busbar according to the present invention.

Furthermore, the arranging of the electrically connecting part within the clear dimension of the bridging portion may further increase the robustness of the proposed devices against mechanical loads. In particular, the proposed devices may be more reliable than devices comprising wire bonds due to the high risk of mechanical failure of usually weak and frail wire bonded electrical connections. Specifically, the proposed devices may show an increased robustness against failure due to dynamical and thermal/mechanical loads by allowing for a higher admissible safe mechanical decoupling on the interconnected electronic components, such as on the interconnected battery cells. Further, higher decoupling onto the electronic components may be admissible due to an absorbance of the mechanical loads by the mechanism effect included in the busbar thereby lessening the load on the electronic components, e.g. on the battery cells.

Further, the proposed devices may increase fatigue performance, minimize electrical resistance thereby decreasing local dissipation and may further minimize local temperature peaks, by the dimensions and patterns of the incisions, taperings, kinematic pairs and cut outs being adaptable and/or selectable according to desired characteristic. Specifically, the proposed devices may easily be adaptable to different electronic components, such as to different battery cells, e.g. too differently shaped battery cells, and may thus be more flexibly adopted to specific requirements such as allowable maximum loads, dimensional restrictions and/or physical characteristics.

In particular, different mechanism designs, such as using incisions, taperings, kinematic pairs and/or cut outs in the electrically connecting parts, may allow controlling of a direction in which a mechanical load resulting in deformation, e.g. of the electrically connecting part of the bridging portion of the busbar, may act, such that the deformation may be controlled. In particular, by controlling the direction of the mechanical loads, rotation torques may be very low or may even be avoided entirely, thereby limiting possible breakages and damages due to rotational forces on the devices.

The proposed devices may further allow for implementing a current safety element, i.e. a fuse, and a requirement of withstanding mechanical loads in one entity and/or object, thereby reducing the number of components of the devices, reducing design constraints and reducing manufacturing costs. In particular, the devices may, by adapting a size, shape and pattern of one or more of the incisions, taperings, kinematic pairs and cut outs, allow for a redirecting of mechanical forces, resulting in lower loads acting onto the electronic components and/or onto the connecting portions connectable to the electronic components, while at the same time allowing for an effective current safety element, such as for a fuse, protecting the electronic components from a possibly damaging overcurrent spike for a defined time.

As an example, the proposed devices may be more resource conserving than known devices. In particular, the proposed devices may decrease manufacturing complexity by avoiding costly bending processes and reducing the number of welding connections and may thus be less costly and show reduced manufacturing costs compared to known devices. Furthermore, specifically due to the potential integration of the current safety element into the busbar, the proposed devices may allow for less individual parts, which may further help reduce manufacturing costs and complexity of assembly.

Summarizing and without excluding further possible embodiments, the following embodiments may be envisaged:
Embodiment 1: A busbar for interconnecting at least two electronic components, comprising at least two connecting portions each connectable to at least one of the at least two electronic components and at least one bridging portion arranged between the at least two connecting portions, wherein the bridging portion comprises at least one electrically connecting part arranged within a clear dimension of the bridging portion, wherein the electrically connecting part is at least partially flexible thereby mechanically decoupling the two connecting portions.
Embodiment 2: The busbar according to the preceding embodiment, wherein the electrically connecting part comprises, specifically for mechanically decoupling the two connecting portions, at least one element selected from the group consisting of at least one incision; at least one tapering, e.g. a tapering such that the at least two connecting portions have different cross sectional areas; at least one kinematic pair, e.g. a kinematic pair connecting at least two parts of the bridging portion, such as at least one joint and/or hinge.
Embodiment 3: The busbar according to any one of the preceding embodiments, wherein, specifically for mechanically decoupling the two connecting portions, the electrically connecting part comprises more than one incision, wherein at least two of the incisions are arranged on opposing sides of the bridging portion.
Embodiment 4: The busbar according to any one of the preceding embodiments, wherein, specifically for mechanically decoupling the two connecting portions, the electrically connecting part comprises at least three incisions, wherein at least two of the at least three incisions are arranged on the same side of the bridging portion.
Embodiment 5: The busbar according to the preceding embodiment, wherein the at least three incisions are arranged in an alternating fashion, e.g. such that in a direction from a first of the at least two connecting portions to a second of the at least two connecting portions the at least three incisions alternate between being arranged on a left and on a right side of the bridging portion.
Embodiment 6: The busbar according to any one of the preceding embodiments, wherein the bridging portion further comprises at least one cut out, such as at least one opening and/or hole.
Embodiment 7: The busbar according to any one of the four preceding embodiments, wherein at least one of the incisions is deeper than at least one other incision.
Embodiment 8: The busbar according to any one of the five preceding embodiments, wherein a maximum depth dₘₐₓ of at least one of the incisions, specifically of at least two or more incisions, more specifically of all incisions, is bigger than a maximum width wₘₐₓ of the same incision, specifically dₘₐₓ ≥ 1.5 wₘₐₓ, more specifically dₘₐₓ ≥ 2 wₘₐₓ.
Embodiment 9: The busbar according to any one of the six preceding embodiments, wherein a minimum depth dₘᵢₙ of at least one of the incisions, specifically of two or more incisions, more specifically of all incisions, is bigger than ½ of a maximum width W_{1/2} of the bridging portion, specifically dₘᵢₙ ≥ W_{1/2}.
Embodiment 10: The busbar according to any one of the seven preceding embodiments, wherein at least one of the incisions, specifically all incisions, comprises a void having, specifically in a top plane view of the busbar, a projected shape selected from the group consisting of a rectangular shape; a triangular shape, such as a v-shape; a trapezoidal shape; a u-shape, such as a rounded u-shape, e.g. a u-shape having a rounded and/or curved transition between the two ends of the u-shape and the bridge portion.
Embodiment 11: The busbar according to any one of the preceding embodiments, wherein the electrically connecting part comprises at least one current safety element, such as a fuse and/or a circuit breaker.
Embodiment 12: The busbar according to the preceding embodiment, wherein one or more of the dimensions, e.g. a width and/or a depth and/or a cross section and/or a thickness, and/or at least one material of the electrically connecting part is selected such that the at least one current safety element, e.g. the fuse, fulfills, at least within predetermined tolerances, at least one predefined characteristic, such as a predefined time-current-curve.
Embodiment 13: The busbar according to any one of the two preceding embodiments, wherein in case the electrically connecting part comprises at least one incision, a remnant of the bridging portion on a side opposing the at least one incision is or comprises the current safety element, wherein a depth d and/or width w of the at least one incision and/or a material of the remnant of the bridging portion is chosen according to the remnant's ability to withstand a preset electric current for a preset amount of time before breaking.
Embodiment 14: The busbar according to any one of the three preceding embodiments, wherein in case the electrically connecting part comprises at least one tapering, the tapering is or comprises the current safety element, wherein the dimension and/or a material of the tapering is chosen according to the tapering's ability to withstand a preset electric current for a preset amount of time before breaking.
Embodiment 15: The busbar according to any one of the four preceding embodiments, wherein in case the electrically connecting part comprises at least one kinematic pair, the at least one kinematic pair is or comprises the current safety element, wherein at least one dimension and/or a material of at least one part of the kinematic pair is chosen according to the part's ability to withstand a preset electric current for a preset amount of time before breaking.
Embodiment 16: The busbar according to any one of the five preceding embodiments, wherein the current safety element comprises one or more metal materials selected from the group consisting of: aluminum; copper; one or more of their alloys, such as Konstantane; other conductive metal materials; one or more of their alloys; a semiconductor material.
Embodiment 17: The busbar according to any one of the preceding embodiments, wherein at least one of the at least two electronic components is a battery cell.
Embodiment 18: The busbar according to the preceding embodiment, wherein both of the at least two electronic components are battery cells.
Embodiment 19: An electronic module comprising at least two electronic components and at least one busbar according to any one of the preceding embodiments referring to a busbar, wherein the busbar interconnects the at least two electronic components.
Embodiment 20: The electronic module according to the preceding embodiment, wherein at least one of the at least two electronic components is a battery cell, wherein the at least one battery cell is selected from the group consisting of: at least one pouch battery; at least one cylindrical battery; at least one prismatic battery and at least one blade battery, such as a battery, e.g. at least one blade cell.
Embodiment 21: The electronic module according to any one of the preceding embodiments referring to an electronic module, wherein the electronic module is a battery module, wherein both electronic components are battery cells.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
- Figures 1 and 2: show different embodiments of an electronic module comprising an embodiment of a busbar in a top plane view (Figure 1) and in a front plane view (Figure 2);
- Figures 3 to 5: show different embodiments of a busbar in top plane views;
- Figures 6 to 13: show parts of different embodiments of a busbar in top plane views; and
- Figures 14: shows a graph of a time-current curve.

### Detailed description of the embodiments

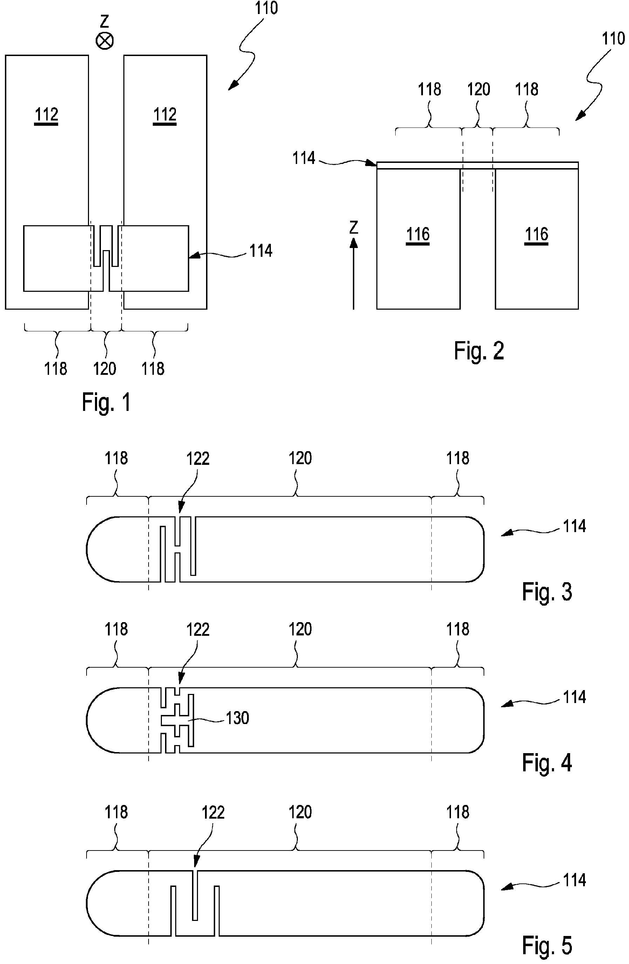

In Figure 1, an embodiment of an electronic module 110 comprising at least two electronic components 112 and at least one busbar 114 is illustrated in a top plane view. The busbar 114 interconnects the at least two electronic components 112. A different embodiment of the electronic module 110 is illustrated in Figure 2 in a front plane view. The two electronic components may for example be or may comprise battery cells and thus, the busbar 114 may exemplarily be configured for interconnecting at least two battery cells 116.

The busbar 114 may comprise at least two connecting portions 118 each connectable to at least one of the at least two electronic components 112 and at least one bridging portion 120 arranged between the at least two connecting portions 118.

Figures 3 to 5 illustrate different embodiments of a busbar 114 in top plane views. The bridging portion 120 comprises at least one electrically connecting part 122 arranged within a clear dimension of the bridging portion 120, wherein the electrically connecting part 122 is at least partially flexible thereby mechanically decoupling the two connecting portions 118. As an example, the electrically connecting part 122 may be arranged on or within an arbitrary location of the bridging portion 120, e.g. in a middle or closer towards one connecting portion as exemplarily illustrated in Figures 3 to 5.

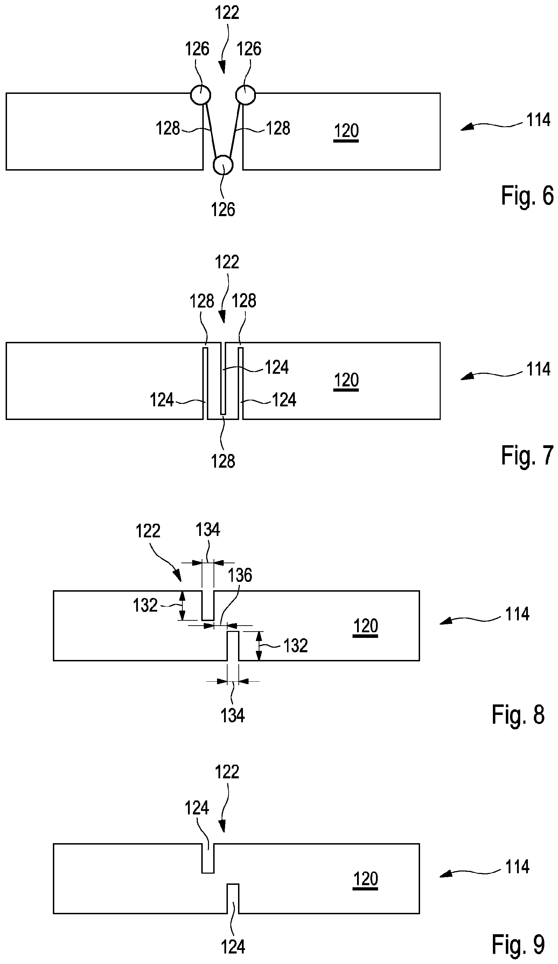

In Figures 6 to 13, parts of different embodiments of a busbar 114 are illustrated in top plane views. The electrically connecting part 122 may for example comprise, specifically for mechanically decoupling the two connecting portions 118, at least one element. Such an element may for example be at least one incision 124 and/or at least one tapering 125 and/or at least one kinematic pair, such as a joint 126. Combinations of these elements may also be possible. Exemplary illustrations of the electrically connecting part 122 can be found in Figures 6 and 7. As an example, the electrically connecting part 122 may comprise a plurality of joints 126 and/or a plurality of incisions 124.

Additionally or alternatively, the electrically connecting part 122 may comprise at least one current safety element, such as a fuse 128. For this purpose, as an example, the dimensions and/or the material of the electrically connection part 122 and its one or more incisions 124, taperings 125 and kinematic pairs, such as joints 126 and hinges, may be adapted to sustain under a specific, predefined current for a predefined amount of time.

The electrically connecting part 122 may specifically comprise more than one incision 124, wherein at least two of the incisions 122 may be arranged on opposing sides of the bridging portion 120. Two incisions 122 arranged on opposing sides of the bridging portion 120 may exemplarily be illustrated in Figures 8 to 11. However, additionally or alternatively, the electrically connecting part 122 may comprises more than two, for example at least three, incisions 124, wherein the incisions 124 may be arranged in an alternating fashion. Such an arrangement may exemplarily be illustrated in Figure 5. However, other arrangements, such as four incisions 124 arranged in an alternating fashion and/or directly across from each other may also be possible. Such an arrangement may exemplarily be illustrated in Figure 3.

Furthermore, the bridging portion 120, e.g. in the electrically connecting part 122, may further comprise at least one cut out 130. An arrangement wherein four incisions arranged across from each other are combined with a cut out may exemplarily be illustrated in Figure 4.

As an example, joints 126 and incisions 124 may be combined and/or exchanged, such as by replacing one or more joints 126 by smaller remnants of the bridging portion, e.g. illustrated as fuses 128 in Figure 7, and optionally one or more levers by thicker areas of the electrically connecting part 122 between the incisions 124.

Additionally or alternatively, the incisions 124 may have different shapes. Specifically, a depth d 132 and a width w 134 of the incisions 124 may be chosen, e.g. be individually adapted, according to a desired characteristic of the electrically connecting part 122, for example as a fuse 128 and/or the flexibility of the electrically connecting part 122, i.e. for its ability to mechanically decouple the two connecting portions 118 of the busbar 114. Furthermore, a distance 136 between neighboring incisions 124 may also be chosen and/or adjusted according to the desired characteristic of the electrically connecting part 122.

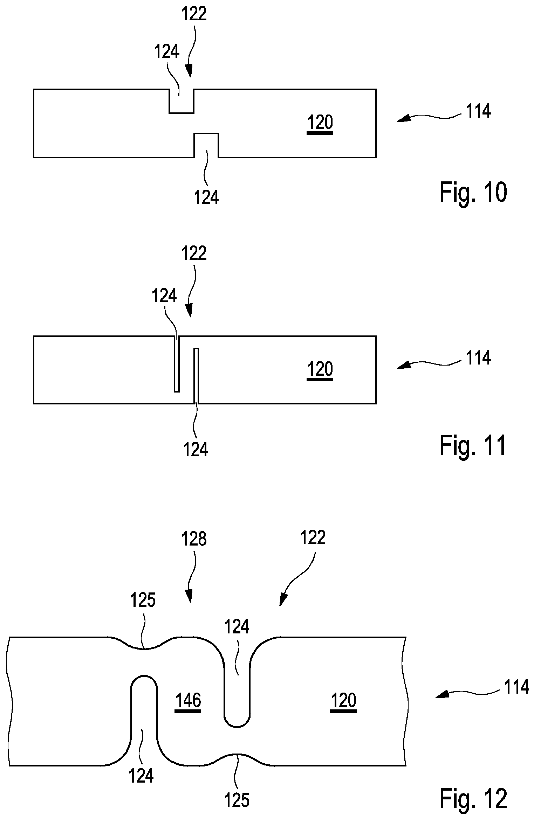

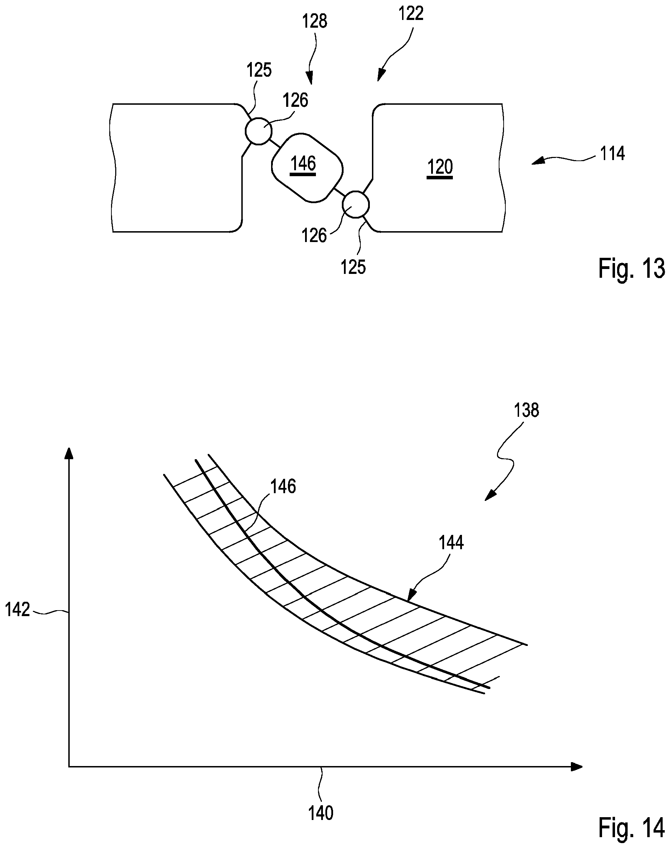

In Figures 12 and 13, further combinations of the elements of the electrically connecting part 122 are illustrated, for example a combination of incisions 124, taperings 125 and joints 126. Specifically, one or more of the dimensions of the incisions 124, the taperings 125 and/or the joints 126 as well as the material of the electrically connecting part 122 may be selected such that the current safety element, e.g. the fuse 128, at least within predetermined tolerances, fulfills at least one predefined characteristic, such as a predefined time-current-curve.

An exemplary graph 138 of a time-current-curve is exemplarily illustrated in Figure 14, wherein on the x-axis 140 the current I is illustrated on a logarithmic scale, and on the y-axis 142 the time t is illustrated in a logarithmic scale. In the graph 138, the hatched area 144 may refer to allowable predefined correlations between the break time t and the current I, to be targeted when selecting the dimensions and/or the at least one material of the electrically connecting part 122, e.g. of the incisions 124, the taperings 125 and the joints 126. Furthermore, in the graph 138, an example of an actual time-current-curve 116, e.g. for the embodiment illustrated in Figure 13, may be shown. As an example, the material and/or the dimensions of the upper left joint 126 may be selected such as to allow for a short break time at high currents, wherein for example a position of the lower left joint 126 may be selected such as to control a thermal path, i.e. defining an area where, when current is transmitted between the electronic components 112 via the busbar 114, heat is most likely to accumulate. Furthermore, the material and/or the dimensions of an intermediate connection, i.e. an intermediate connecting portion 146, such as an intermediate remnant of the bridging portion 120, may be selected according to a targeted thermal capacity of the current safety element, i.e. of the fuse 128.

### List of reference numbers

- 110: electronic module
- 112: electronic component
- 114: busbar
- 116: battery cell
- 118: connecting portion
- 120: bridging portion
- 122: electrically connecting part
- 124: incision
- 125: tapering
- 126: joint
- 128: fuse
- 130: cut out
- 132: depth d
- 134: width w
- 136: distance
- 138: graph of time-current-curve
- 140: log(I)
- 142: log(t)
- 144: targeted predefined correlations between the break time t and the current I
- 146: intermediate connecting portion
- 148: actual time-current-curve

## Claims

1. A busbar (114) for interconnecting at least two electronic components (112), comprising at least two connecting portions (118) each connectable to at least one of the at least two electronic components (112) and at least one bridging portion (120) arranged between the at least two connecting portions (118), wherein the bridging portion (120) comprises at least one electrically connecting part (122) arranged within a clear dimension of the bridging portion (120), wherein the electrically connecting part (122) is at least partially flexible thereby mechanically decoupling the two connecting portions (118).

2. The busbar (114) according to the preceding claim, wherein the electrically connecting part (122) comprises at least one element selected from the group consisting of: at least one incision (124); at least one tapering; at least one kinematic pair, such as at least one joint (126) and/or hinge.

3. The busbar (114) according to any one of the preceding claims, wherein the electrically connecting part (122) comprises more than one incision (124), wherein at least two of the incisions (124) are arranged on opposing sides of the bridging portion (120).

4. The busbar (114) according to any one of the preceding claims, wherein the electrically connecting part (122) comprises at least three incisions (124), wherein at least two of the at least three incisions (124) are arranged on the same side of the bridging portion (120).

5. The busbar (114) according to the preceding claim, wherein the at least three incisions (124) are arranged in an alternating fashion.

6. The busbar (114) according to any one of the preceding claims, wherein the bridging portion (120) further comprises at least one cut out (130), such as at least one opening and/or hole.

7. The busbar (114) according to any one of the four preceding claims, wherein at least one of the incisions (124) is deeper than at least one other incision (124).

8. The busbar (114) according to any one of the preceding claims, wherein the electrically connecting part (122) comprises at least one current safety element.

9. The busbar (114) according to the preceding claim, wherein one or more of the dimensions and/or at least one material of the electrically connecting part (122) is selected such that the at least one current safety element fulfills, at least within predetermined tolerances, at least one predefined characteristic.

10. The busbar (114) according to any one of the two preceding claims, wherein in case the electrically connecting part (122) comprises at least one incision (124), a remnant of the bridging portion (120) on a side opposing the at least one incision (124) is or comprises the current safety element, wherein a depth d and/or width w of the at least one incision (124) and/or a material of the remnant of the bridging portion (120) is chosen according to the remnant's ability to withstand a preset electric current for a preset amount of time before breaking.

11. The busbar (114) according to any one of the three preceding claims, wherein in case the electrically connecting part (122) comprises at least one tapering, the tapering is or comprises the current safety element, wherein the dimension and/or a material of the tapering is chosen according to the tapering's ability to withstand a preset electric current for a preset amount of time before breaking.

12. The busbar (114) according to any one of the four preceding claims, wherein in case the electrically connecting part (122) comprises at least one kinematic pair, the at least one kinematic pair is or comprises the current safety element, wherein at least one dimension and/or a material of at least one part of the kinematic pair is chosen according to the part's ability to withstand a preset electric current for a preset amount of time before breaking.

13. The busbar (114) according to any one of the five preceding claims, wherein the current safety element comprises one or more metal materials selected from the group consisting of aluminum; copper; one or more of their alloys; other conductive metal materials; one or more of their alloys; a semiconductor material.

14. An electronic module (110) comprising at least two electronic components (112) and at least one busbar (114) according to any one of the preceding claims, wherein the busbar (114) interconnects the at least two electronic components (112).

15. The electronic module (110) according to the preceding claim, wherein at least one of the at least two electronic components (112) is a battery cell (116), wherein the at least one battery cell (116) is selected from the group consisting of: at least one pouch battery; at least one cylindrical battery and at least one prismatic battery and at least one blade battery.
